# EUROPÄISCHE PATENTSCHRIFT

(11) **EP 2 374 392 B1**
(45) Veröffentlichungstag und Bekanntmachung des Hinweises auf die Patenterteilung: **23.07.2014**
(21) Anmeldenummer: 10401048.3
(22) Anmeldetag: 06.04.2010
(51) Int. Cl.: A47L 9/00, F16J 15/02, F16J 15/06

(54) **Staubsauger mit einem Gehäuse und einer Gehäusedichtung**
Vacuum cleaner with casing and casing sealing
Aspirateur avec boîtier et joint de boîtier

(43) Veröffentlichungstag der Anmeldung: 12.10.2011
(73) Patentinhaber: Miele & Cie. KG, 33332 Gütersloh (DE)
(72) Erfinder: Chwolka, Cornelia, 33334 Gütersloh (DE); Mersmann, Udo, 33335 Gütersloh (DE)

(56) Entgegenhaltungen:
- EP-A2- 0 770 348
- DE-A1- 4 421 215
- DE-A1-102006 038 910
- DE-A1-102008 038 017
- DE-B3-102004 024 817
- DE-U1- 20 203 498
- DE-U1-202009 006 370
- FR-A1- 2 402 435
- US-A1- 2003 140 447
- US-B1- 6 812 263

## Beschreibung

Die Erfindung betrifft einen Staubsauger gemäß dem Oberbegriff des Anspruchs 1.

Derartige Staubsauger sind allgemein bekannt. Eine Dichtung im Bereich des Gebläseraums vermeidet Leistungsverluste des Staubsaugers. Bekannte Dichtungen sind im Querschnitt beispielsweise H-förmig. Bei solchen Dichtungen ist eine so genannte blinde Montage, bei der Gehäuseteile aufeinander montiert werden, ohne einen Bereich zu sehen, in dem die Dichtung angeordnet ist, oftmals schwierig. Dies ist jedoch notwendig, da zumindest ein Teil der Dichtung im Inneren des Staubsaugers angeordnet ist. Bei biegesteifen Dichtungen kann es schnell zu einem Verkanten der Gehäuseteile mit Dichtungsflanschen des H-förmigen Profils kommen. Eine elastische Dichtung kann sich dagegen bei der blinden Montage leicht verbiegen oder verknicken, so dass eine Wirkung der Dichtung nicht mehr gegeben ist. Außerdem ist eine Vormontage auf einen der Gehäuseteile aufgrund ihrer Forminstabilität erschwert.

Aus der EP 0770348 A2 ist ein Staubsaugergehäuse bekannt, welches aus mehreren Teilen besteht, wobei das Gebläse in einem separaten Gebläseraum gekapselt ist, der aus einer Vielzahl von Teilen besteht. Zwischen den Gehäuseteilen, die den Gebläseraum bilden sind, im Querschnitt rechteckige Dichtungen in U-förmigen Aufnahmen angeordnet. Die vielen Einzelteile aus denen sich das vorgeschlagene Gehäuse ergibt erhöhen den Fertigungsaufwand. Außerdem führen die zahlreichen notwendigen Dichtungen zu einem erhöhten Montageaufwand.

Eine Aufgabe der Erfindung besteht entsprechend darin, einen Staubsauger mit einer Dichtung im Bereich des Gebläseraums anzugeben, mit der die oben genannten Nachteile vermieden werden können.

Die Aufgabe wird mit einem sStaubsauger gemäss Anspruch 1 gelöst.

Dazu ist bei einem Staubsauger mit einem Gehäuse, umfassend ein erstes und ein zweites Gehäuseteil, wobei das erste Gehäuseteil als Gehäuseunterteil und das zweite Gehäuseteil als Gehäuseoberteil ausgebildet ist, und wobei zwischen den Gehäuseteilen im Bereich eines durch diese gebildeten Gebläseraums eine Dichtung angeordnet ist, vorgesehen, dass die Dichtung im Querschnitt als U-förmiges Profil gestaltet ist, wobei das Gehäuseunterteil in einem Randbereich, in welchem das Gehäuseoberteil mit dem Gehäuseunterteil kombinierbar ist, eine U-förmige Aufnahme für die Dichtung und das Gehäuseoberteil aufweist.

Der Vorteil der Erfindung besteht darin, dass eine Montage der Gehäuseteile im Bereich des Gebläseraums erleichtert wird. Auch eine blinde Montage wird ermöglicht. Somit wird eine Platzierung der Dichtung wie vorgesehen gewährleistet, so dass diese ihre Aufgabe der Abdichtung des Gebläseraums bestmöglich erfüllen kann. Die Kombination von Gehäuseunterteil und Gehäuseoberteil ist insgesamt sehr gut automatisierbar.

Vorteilhafte Ausgestaltungen der Erfindung sind Gegenstand der Unteransprüche. Dabei verwendete Rückbeziehungen weisen auf die weitere Ausbildung des Gegenstands des Hauptanspruchs durch die Merkmale des jeweiligen Unteranspruchs hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn die Dichtung einstückig als geschlossener Ring ausgebildet ist, werden Dichtungslücken vermieden, welche Leistungsverluste zur Folge haben können.

Typischerweise bildet der geschlossene Ring eine auf unterschiedliche Höhenabschnitte der Gehäuseteile abgestellte dreidimensionale Kontur aus. Dies ermöglicht einen passgenauen Sitz der Dichtung zwischen den Gehäuseteilen, auch in Übergangsbereichen zwischen den Höhenabschnitten.

Die Dichtung ist typischerweise an einem der Gehäuseteile, insbesondere am Gehäuseoberteil, vormontiert, so dass das Gehäuseoberteil direkt in blinder Montage, auch durch automatische Handhabungsvorrichtungen, mit dem Gehäuseunterteil kombiniert werden kann.

Die Dichtung ist zumindest teilweise aus einem biegesteifen Kunststoff - Hartkomponente - gebildet, dies ergibt eine erleichterte Montage der Dichtung, weil sie formstabiler ist.

Die Dichtung ist teilweise aus der Hartkomponente und teilweise aus einem elastisch deformierbaren Kunststoff - Weichkomponente - gebildet, wobei zwei Dichtungsflansche, die eine offene Seite des U-förmigen Profils der Dichtung bilden, zumindest teilweise aus der Weichkomponente gebildet sind, und wobei ein Dichtungsteil, das eine geschlossene Seite des U-förmigen Profils der Dichtung bildet, zumindest teilweise aus der Hartkomponente gebildet ist. Dabei erleichtert der untere, aus der Hartkomponente gebildete Dichtungsteil das Vormontieren am Gehäuseoberteil und das Einführen in die U-förmige Aufnahme. Mit der Weichkomponente im Bereich der Dichtungsflansche wird eine bessere Dichtungswirkung erreicht, da sie sich flexibler an eine Form der Gehäuseteile anpasst.

Zumindest einer der Dichtungsflansche kann an einer Außenseite Dichtlippen umfassen, wobei die Dichtlippen aus der Weichkomponente gebildet sind. Dies hat den Grund, dass die U-förmige Aufnahme typischerweise so breit ausgeführt ist, dass bei der Montage nur die Dichtlippen mit einer Innenwand der U-förmigen Aufnahme in Kontakt treten. Dadurch wird die Reibung zwischen Dichtung und Aufnahme verringert, was ein besseres Einführen der Dichtung in die Aufnahme einerseits und Schonung der Dichtung andererseits ermöglicht. Außerdem ist der Abstand zwischen den Flanschen breiter als der einzuführende Rand, was ein Finden des Profils erleichtert. Durch die Dichtlippen wird außerdem ermöglicht, dass auch im montierten Zustand der Gehäuseteile Luft zwischen der Dichtung und der Innenwand der U-förmigen Aufnahme verbleibt. Dadurch können Bewegungen der Gehäuseteile während des Betriebs des Staubsaugers ausgeglichen werden, wobei ein Kontakt der Dichtlippen mit der U-förmigen Aufnahme, und damit die Dichtungswirkung, bestehen bleibt. Es sind bevorzugt mindestens zwei Dichtlippen an jeder Außenseite angeordnet.

Wenn an einer bzw. der geschlossenen Seite des U-förmigen Profils der Dichtung zumindest abschnittsweise Fasen gebildet sind, wird ein besseres Finden der U-förmigen Aufnahme bei einer blinden Montage gewährleistet, so dass sich die Möglichkeit einer Fehlmontage verringert. Zusätzlich können an einem oberen, inneren Rand der U-förmigen Aufnahme Fasen ausgebildet sein, wodurch die blinde Montage noch weiter erleichtert wird.

Typischerweise ist ein Abschnitt einer Außenwand des Gehäuseoberteils in einem Bereich oberhalb der Dichtung in Richtung auf eine Außenseite des Staubsaugers verbreitert ausgestaltet. Dabei steht die Außenwand mit der U-förmigen Aufnahme in Kontakt. Dies verhindert eine Verschmutzung der Dichtung und dient außerdem dem Design des Staubsaugers, da eine geschlossene Kante statt eines offenen Spalts sichtbar ist.

Der Dichtung, insbesondere der Weichkomponente, kann ein Schmiermittel, insbesondere eine Fettsäure, zugesetzt sein, welches die Montage, sowohl am Gehäuseoberteil als auch beim Einführen in die U-förmige Aufnahme, zusätzlich erleichtert.

Wenn an der Dichtung ein Kunststoffteil zur Abdichtung eines Ausschnitts an einer einem Kabeltrommelraum zugewandten Seite angeformt ist, ist die Dichtungswirkung auch in diesem Bereich gegeben.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand führen.

Es zeigen
- Figur 1: einen Querschnitt durch einen Staubsauger mit einer Dichtung gemäß einem Ausführungsbeispiel der Erfindung,
- Figur 2: eine perspektivische Darstellung eines Gehäuseunterteils des Staubsaugers aus Figur 1 im Bereich eines Gebläseraums,
- Figur 3: eine einstückig ausgeformte Dichtung gemäß einem Ausführungsbeispiel der Erfindung,
- Figur 4: schematisch vereinfacht einen Querschnitt durch eine Dichtung gemäß einem Ausführungsbeispiel der Erfindung,
- Figur 5: eine Querschnittsdarstellung der an einem Gehäuseoberteil vormontierten Dichtung und eine U-förmige Aufnahme an einem Gehäuseunterteil,
- Figur 6: eine Querschnittsdarstellung der Dichtung im montierten Zustand der Gehäuseteile an einer innen liegenden Gehäusewand, und
- Figur 7: eine Querschnittsdarstellung der Dichtung, im montierten Zustand der Gehäuseteile an einer Außenseite des Staubsaugers.

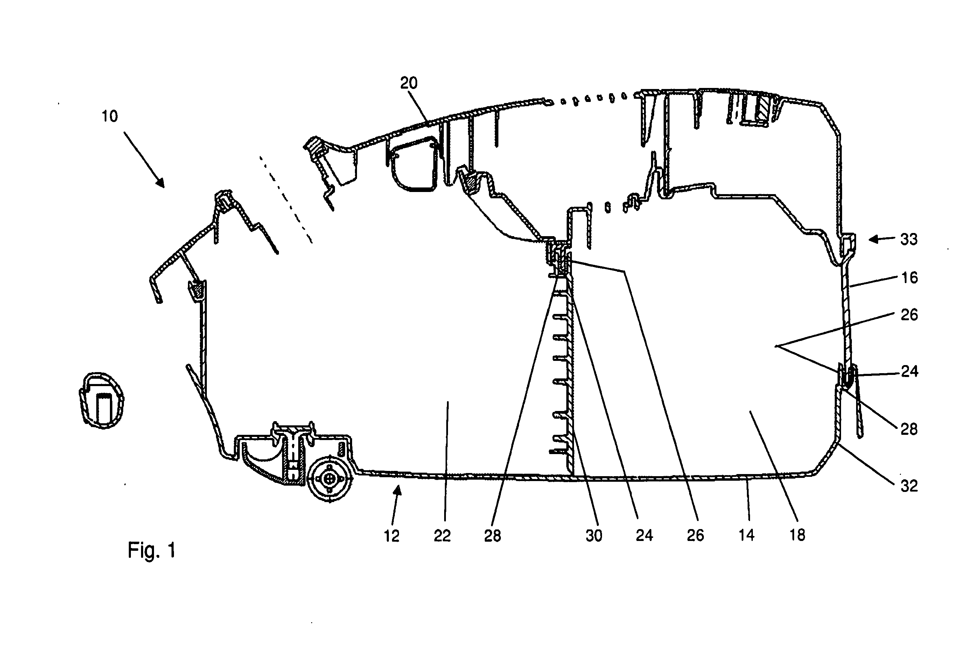

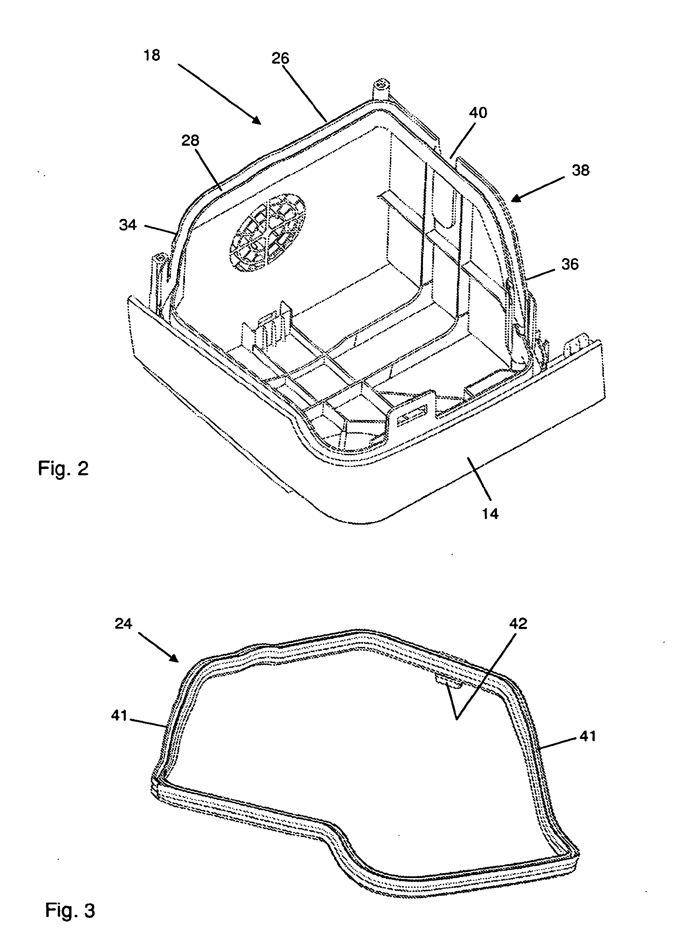

Figur 1 zeigt einen Querschnitt durch einen Staubsauger 10 gemäß einem Ausführungsbeispiel der Erfindung. Der Staubsauger 10 umfasst ein Gehäuse 12 mit einem ersten und einem zweiten Gehäuseteil. Das erste Gehäuseteil fungiert als Gehäuseunterteil 14 und das zweite Gehäuseteil fungiert als Gehäuseoberteil 16. Das Gehäuseunterteil 14 und das Gehäuseoberteil 16 bilden in einem hinteren Abschnitt des Staubsaugers 10 einen Gebläseraum 18 zur Aufnahme eines Motorgebläses (nicht dargestellt). Oberhalb des Gehäuseoberteils 16 ist außerdem ein Deckel 20 angeordnet, welcher zum Verschließen des Gehäuseoberteils 16 im Bereich eines Staubsammelraums 22 vorgesehen ist. Im Bereich des Gebläseraums 18 zwischen dem Gehäuseunter- und dem Gehäuseoberteil 14, 16 ist eine Dichtung 24 angeordnet. Ein Ausführungsbeispiel der Dichtung 24 ist in Figur 3 gezeigt. Das Gehäuseunterteil 14 weist in einem Randbereich 26, in welchem es mit dem Gehäuseoberteil 16 kombinierbar ist, eine im Querschnitt U-förmige Aufnahme 28 für die Dichtung 24 und das Gehäuseoberteil 16 auf. Das Gehäuseunterteil 14 weist unterschiedliche Höhenabschnitte auf, beispielsweise ist eine erste Gehäusewand 30 zum Staubsammelraum 22 höher als eine zweite Gehäusewand 32 an einer hinteren Seite des Staubsaugers 10. Das Gehäuseoberteil 16 weist darauf abgestellte Höhenabschnitte auf, so dass beide Teile passend zusammengefügt werden können.

In Figur 2 ist der Gebläseraum 18 des Gehäuseunterteils 14 in einer perspektivischen Darstellung ohne Dichtung 24 (Figur 1) gezeigt. Darin ist der Randbereich 26 mit der U-förmigen Aufnahme 28 erkennbar, welche hinterschnittig im Gebläseraum 18 gebildet ist. Auch die unterschiedlichen Höhenabschnitte und Übergangsbereiche 34, 36 zwischen den Höhenabschnitten sind dargestellt. Die U-förmige Aufnahme 28 weist außerdem an einer einem Kabeltrommelraum (nicht dargestellt) zugewandten Seite 38 einen Ausschnitt 40 auf.

Figur 3 stellt die Dichtung 24 einstückig und als geschlossenen Ring dar. Sie weist außerdem eine auf die unterschiedlichen Höhenabschnitte der Gehäuseteile 14, 16 (Figur 1) abgestellte dreidimensionale Kontur auf. Zur Anpassung an die Übergangsbereiche 34, 36 (Figur 2) weist die Dichtung zwei große Höhenversprünge 41 auf. In diesem Bereich ist eine Reibung mit den Gehäuseteilen 14, 16 am größten. An der Dichtung 24 ist ein Kunststoffteil 42, z. B. aus einem weichen elastischen Kunststoff, angeformt, welches zur Abdichtung des Ausschnitts 40 (Figur 2) in der U-förmigen Aufnahme 28 (Figur 1) dient.

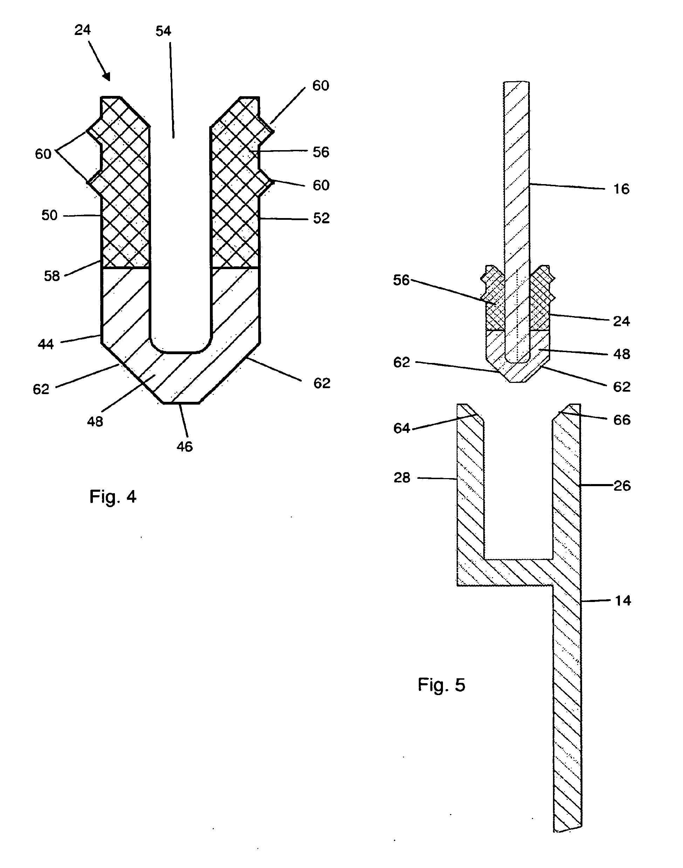

Figur 4 stellt schematisch vereinfacht einen Querschnitt durch die Dichtung 24 gemäß einem Ausführungsbeispiel der Erfindung dar. Die Dichtung 24 ist im Querschnitt als U-förmiges Profil 44 gestaltet und besteht aus zwei Komponenten, wie durch die unterschiedliche Schraffierung deutlich gemacht wird. Dabei ist die Dichtung 24 teilweise, d.h. an einer unteren oder geschlossenen Seite 46 des U-förmigen Profils 44, aus einer Hartkomponente 48, z.B. einem biegesteifen Kunststoff, gebildet. Dichtungsflansche 50, 52 an einer offenen Seite 54 der Dichtung 24 sind ab einer bestimmten Höhe, z. B. ab einem ersten Drittel der gesamten Länge der Dichtungsflansche 50, 52, aus einem elastisch deformierbaren Kunststoff - Weichkomponente 56 - gebildet. Aufgrund der Hartkomponente 48 im unteren Teil des U-förmigen Profils 44 ist die Dichtung 24 formstabil, insbesondere hinsichtlich ihrer dreidimensionalen Kontur, wodurch eine verbesserte Vormontage der Dichtung 24 an dem Gehäuseoberteil 16 ermöglicht wird. Die Dichtungsflansche 50, 52 umfassen außerdem im oberen, aus der Weichkomponente 56 gebildeten Teil an einer Außenseite 58 der Dichtung 24 jeweils zwei Dichtlippen 60. Diese übernehmen einen Großteil der Dichtfunktion. An der Dichtung 24 befinden sich an der unteren, geschlossenen Seite an der Hartkomponente 48 des U-förmigen Profils 44 Fasen 62, welche als Einführschrägen bei der Endmontage der Gehäuseteile 14, 16 (Figur 1) ein leichteres Einführen in die U-förmige Aufnahme 28 (Figur 1) ermöglichen. Die Dichtung 24 kann zur verbesserten Montage mit einem Schmiermittel versehen werden, welches vor einen Spritzgussprozess der Dichtung 24 einem Granulat als Ausgangsstoff für die Weichkomponente 56 zugeführt wird. Es kann sich hierbei um eine Fettsäure, z.B. Erucasäureamid, handeln, welche an eine Oberfläche der Weichkomponente 56 migriert.

Figur 5 ist eine Querschnittsdarstellung der Dichtung 24, wobei diese am Gehäuseoberteil 16 vormontiert ist. Die U-förmige Aufnahme 28 weist ebenfalls Fasen 64, 66 auf, die zu einer Innenseite der U-förmigen Aufnahme 28 gerichtet sind. In Kombination mit den Fasen 62 der Dichtung 24 werden Fehlmontagen bei einer "blinden" Montage (Bereich, in dem die Dichtung 24 angeordnet ist, ist zumindest teilweise nicht einsehbar, da er sich im Inneren des Staubsaugers 10 (Figur 1) befindet) effektiv vermieden.

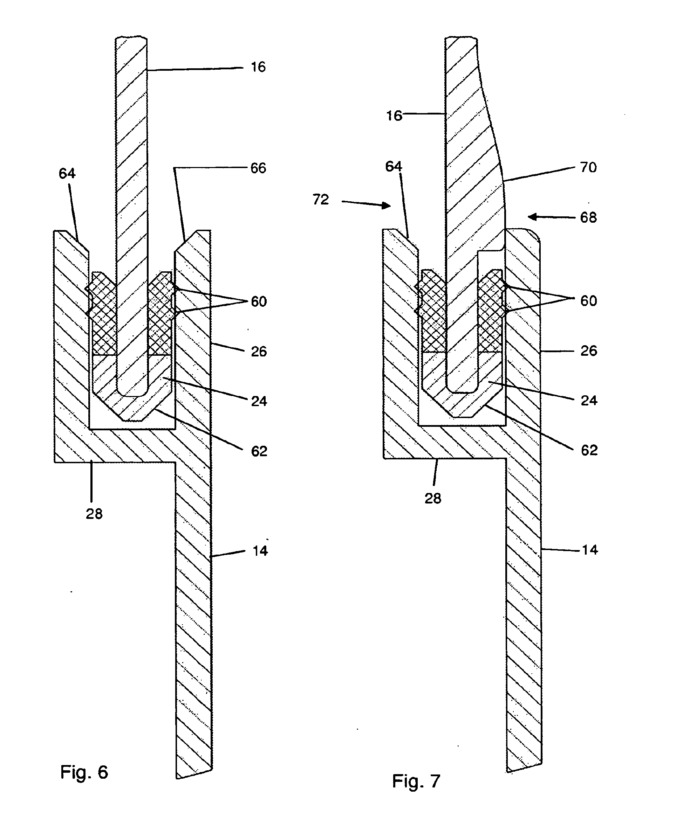

Figur 6 zeigt eine Querschnittsdarstellung der Dichtung 24, im montierten Zustand der Gehäuseteile 14, 16 im Bereich der ersten, innen liegenden Gehäusewand 30, wie sie z. B. an der Gehäusewand 30 (Figur 1) zwischen Gebläseraum 18 (Figur 1) und Staubsammelraum 22 (Figur 1) ausgebildet ist. An dieser Gehäusewand 30 umfasst die U-förmige Aufnahme 28 zwei Fasen 64, 66. Die Dichtung 24 wird komplett von der U-förmigen Aufnahme 28 aufgenommen, so dass eine Verschmutzungsgefahr der Dichtung 24 sehr gering ist. Die U-förmige Aufnahme 28 ist gerade so breit ausgeführt, dass umlaufend um die Dichtung 24 Luft ist, so dass nur die Dichtlippen 60 mit der U-förmigen Aufnahme 28 im Eingriff sind. Beim Erzeugen eines Überdrucks im Gebläseraum 18 während des Betriebs des Staubsaugers 10 (Figur 1) bewegen sich Gehäuseunter- und Gehäuseoberteil 14, 16 zueinander. Durch die Beweglichkeit, die sich aufgrund der verbleibenden Zwischenräume ergibt, können diese Bewegungen ohne Dichtigkeitsverlust ausgeglichen werden.

In Figur 7 ist eine Querschnittsdarstellung der Dichtung 24 im montierten Zustand der Gehäuseteile 14, 16 an einer Außenseite 68 des Staubsaugers 10 gezeigt. Die Außenseite 68 stellt die als Designwand bezeichnete, zweite Gehäusewand 32 des Staubsaugers 10 (Figur 1) dar, wie sie im Bereich des Gebläseraums 18 (Figur 1), z.B. an der hinteren Seite 33 (Figur 1) des Staubsaugers 10 ausgeführt ist. Eine Außenwand 70 des Gehäuseoberteils 16 ist in diesem Bereich in Richtung auf die Außenseite 68 des Staubsaugers 10 verbreitert ausgestaltet, so dass sie mit der U-förmigen Aufnahme 28 in Kontakt steht. Es wird somit eine geschlossene Kante mit der U-förmigen Aufnahme 28 gebildet. An der Außenseite 68 weist die U-förmige Aufnahme 28 keine nach innen gerichtete Fase 66 auf, sondern nur eine nach innen gerichtete Fase 64 an einer zu einem Innenraum des Staubsaugers 10 (Figur 1) gewandten Seite 72 der U-förmigen Aufnahme 28.

Damit lässt sich die Erfindung kurz wie folgt darstellen: Es wird ein Staubsauger 10 mit einem Gehäuse 12, umfassend ein erstes und ein zweites Gehäuseteil, wobei das erste Gehäuseteil als Gehäuseunterteil 14 und das zweite Gehäuseteil als Gehäuseoberteil 16 ausgebildet ist, wobei zwischen den Gehäuseteilen 14, 16 im Bereich eines durch diese gebildeten Gebläseraums 18 eine Dichtung 24 angeordnet ist, angegeben, bei dem die Dichtung 24 im Querschnitt als U-förmiges Profil 44 gestaltet ist, wobei das Gehäuseunterteil 14 in einem Randbereich 26, in welchem das Gehäuseoberteil 16 mit dem Gehäuseunterteil 14 kombinierbar ist, eine U-förmige Aufnahme 28 für die Dichtung 24 und das Gehäuseoberteil 16 aufweist.

## Patentansprüche

1. Staubsauger (10) mit einem Gehäuse (12), umfassend ein erstes und ein zweites Gehäuseteil, wobei das erste Gehäuseteil als Gehäuseunterteil (14) und das zweite Gehäuseteil als Gehäuseoberteil (16) ausgebildet ist, und wobei zwischen den Gehäuseteilen (14, 16) im Bereich eines durch diese gebildeten Gebläseraums (18) eine Dichtung (24) angeordnet ist,
wobei
die Dichtung (24) im Querschnitt als U-förmiges Profil (44) gestaltet ist, wobei das Gehäuseunterteil (14) in einem Randbereich (26), in welchem das Gehäuseoberteil (16) mit dem Gehäuseunterteil (14) kombinierbar ist, eine U-förmige Aufnahme (28) für die Dichtung (24) und das Gehäuseoberteil (16) aufweist, **dadurch gekennzeichnet dass**, die Dichtung (24) zumindest teilweise aus einem biegesteifen Kunststoff - Hartkomponente (48) - gebildet ist, wobei die Dichtung (24) teilweise aus der Hartkomponente (48) und teilweise aus einem elastisch deformierbaren Kunststoff - Weichkomponente (56) - gebildet ist, wobei zwei Dichtungsflansche (50, 52), die eine offene Seite (54) des U-Förmigen Profils (44) der Dichtung bilden, zumindest teilweise aus der Weichkomponente (56) gebildet sind, und wobei ein Dichtungsteil, das eine geschlossene Seite (46) des U-förmigen Profils (44) der Dichtung (24) bildet, zumindest teilweise aus der Hartkomponente (48) gebildet ist.

2. Staubsauger (10) nach Anspruch 1,
wobei die Dichtung (24) einstückig als geschlossener Ring ausgebildet ist.

3. Staubsauger (10) nach Anspruch 2,
wobei der geschlossene Ring eine auf unterschiedliche Höhenabschnitte der Gehäuseteile (14, 16) abgestellte dreidimensionale Kontur ausbildet.

4. Staubsauger (10) nach einem der vorangehenden Ansprüche,
wobei die Dichtung (24) an einem der Gehäuseteile (14, 16) vormontiert ist.

5. Staubsauger (10) nach Anspruch 1,
wobei zumindest einer der Dichtungsflansche (50, 52) an einer Außenseite (58) Dichtlippen (60) umfasst, wobei die Dichtlippen (60) aus der Weichkomponente (56) gebildet sind.

6. Staubsauger (10) nach einem der vorangehenden Ansprüche,
wobei an einer bzw. der geschlossenen Seite (46) des U-förmigen Profils (44) der Dichtung (24) zumindest abschnittsweise Fasen (62) gebildet sind.

7. Staubsauger (10) nach einem der vorangehenden Ansprüche,
wobei ein Abschnitt einer Außenwand (70) des Gehäuseoberteils (16) in einem Bereich oberhalb der Dichtung (24) in Richtung auf eine Außenseite (68) des Staubsaugers (10) verbreitert ausgestaltet ist.

8. Staubsauger (10) nach einem der vorangehenden Ansprüche,
wobei der Dichtung (24) ein Schmiermittel zugesetzt ist.

9. Staubsauger (10) nach einem der vorangehenden Ansprüche,
wobei an der Dichtung (24) ein Kunststoffteil (42) zur Abdichtung eines Ausschnitts (40) an einer einem Kabeltrommelraum zugewandten Seite angeformt ist.

## Claims

1. Vacuum cleaner (10) having a housing (12) which comprises a first and a second housing part, the first housing part being formed as a lower housing part (14) and the second housing part being formed as an upper housing part (16), and a seal (24) being arranged between the housing parts (14, 16) in the region of a fan space (18) formed thereby,
the cross section of the seal (24) being designed to have a U-shaped profile (44), the lower housing part (14) having a U-shaped receptacle (28) for the seal (24) and the upper housing part (16) in a rim region (26) in which the upper housing part (16) can be combined with the lower housing part (14),
**characterised in that** of the seal (24) is formed at least in part from an inflexible plastics material, the rigid component (48), part of the seal (24) being formed from the rigid component (48) and part from an elastically deformable plastics material, the soft component (56), two sealing flanges (50, 52), which form an open side (54) of the U-shaped profile (44) of the seal, being formed from the soft component (56) at least in part, and a sealing part, which forms a closed side (46) of the U-shaped profile (44) of the seal (24), being formed from the rigid component (48) at least in part.

2. Vacuum cleaner (10) according to claim 1,
wherein the seal (24) is formed as one piece as a closed ring.

3. Vacuum cleaner (10) according to claim 2,
wherein the closed ring forms a three-dimensional contour tailored to different height portions of the housing parts (14, 16).

4. Vacuum cleaner (10) according to any of the preceding claims, wherein the seal (24) is preassembled on one of the housing parts (14, 16).

5. Vacuum cleaner (10) according to claim 1,
wherein at least one of the sealing flanges (50, 52) comprises sealing lips (60) on one outer side (58), wherein the sealing lips (60) are formed from the soft component (56).

6. Vacuum cleaner (10) according to any of the preceding claims,
wherein chamfers (62) are formed at least on portions of a or the closed side (46) of the U-shaped profile (44) of the seal (24).

7. Vacuum cleaner (10) according to any of the preceding claims,
wherein a portion of an outer wall (70) of the upper housing part (16) is wider towards an outer side (68) of the vacuum cleaner (10) in a region above the seal (24).

8. Vacuum cleaner (10) according to any of the preceding claims,
wherein a lubricant is added to the seal (24).

9. Vacuum cleaner (10) according to any of the preceding claims,
wherein a plastics part (42) for sealing a cut-out (40) on a side facing a cable drum space is moulded on the seal (24).

## Revendications

1. Aspirateur (10) avec un carter (12), comprenant une première et une deuxième partie de carter, la première partie de carter étant constituée en tant que partie inférieure de carter (14) et la deuxième partie de carter en tant que partie supérieure de carter (16), et un joint d'étanchéité (24) étant disposé entre les parties de carter (14, 16) dans la zone d'un compartiment de ventilateur (18) formée par ces parties,
le joint d'étanchéité (24) étant, en section transversale, façonné en tant que profilé en U (44), la partie inférieure de carter (14) présentant, dans une zone de bord (26) dans laquelle la partie supérieure de carter (16) peut être combinée avec la partie inférieure de carter (14), un logement (28) en U pour le joint d'étanchéité (24) et pour la partie supérieure de carter (16),
**caractérisé en ce que** le joint d'étanchéité (24) est formé, au moins partiellement, d'une matière plastique rigide en torsion - un composant dur (48) - le joint d'étanchéité (24) étant formé partiellement du composant dur (48) et partiellement d'une matière plastique élastiquement déformable - un composant tendre (56) - deux brides d'étanchéité (50, 52), qui forment un côté ouvert (54) du profilé en U (44) du joint d'étanchéité, étant formées au moins partiellement du composant tendre (56), et une partie d'étanchéité, qui forme un côté fermé (46) du profilé en U (44) du joint d'étanchéité (24), étant formée au moins partiellement du composant dur (48).

2. Aspirateur (10) selon la revendication 1,
dans lequel le joint d'étanchéité (24) est constitué d'un seul tenant en tant qu'anneau fermé.

3. Aspirateur (10) selon la revendication 2,
dans lequel l'anneau fermé constitue un contour tridimensionnel adapté à de différents tronçons dans le sens de la hauteur des parties de carter (14, 16).

4. Aspirateur (10) selon une des revendications précédentes,
dans lequel le joint d'étanchéité (24) est prémonté sur une des parties de carter (14, 16).

5. Aspirateur (10) selon la revendication 1,
dans lequel au moins une des brides d'étanchéité (50, 52) comprend des lèvres d'étanchéité (60) sur un côté extérieur (58), les lèvres d'étanchéité (60) étant formées du composant tendre (56).

6. Aspirateur (10) selon une des revendications précédentes,
dans lequel des chanfreins (62) sont formés au moins par tronçons sur un ou sur le côté fermé (46) du profilé en U (44) du joint d'étanchéité (24).

7. Aspirateur (10) selon une des revendications précédentes,
dans lequel un tronçon d'une paroi extérieure (70) de la partie supérieure de carter (16) est constitué de façon élargie dans une zone au-dessus du joint d'étanchéité (24) en direction d'un côté extérieur (68) de l'aspirateur (10).

8. Aspirateur (10) selon une des revendications précédentes,
dans lequel un lubrifiant est ajouté au joint d'étanchéité (24).

9. Aspirateur (10) selon une des revendications précédentes,
dans lequel une partie en matière plastique (42) est formée sur le joint d'étanchéité (24) pour assurer l'étanchéité d'une découpe (40) sur un côté tourné vers un compartiment de tambour de câble.
